Europäisches Patentamt

European Patent Office

Office européen des brevets

(11) Numéro de publication : **0 036 817**
**B1**

(12) **FASCICULE DE BREVET EUROPÉEN**

(45) Date de publication du fascicule du brevet :
**15.08.84**

(51) Int. Cl.³ : **B 60 P 3/34**

(21) Numéro de dépôt : **81400447.9**

(22) Date de dépôt : **20.03.81**

(54) Aménagement intérieur de véhicule tel que caravane pliante.

(30) Priorité : **21.03.80 FR 8006340**
**26.09.80 FR 8020677**

(43) Date de publication de la demande :
**30.09.81 Bulletin 81/39**

(45) Mention de la délivrance du brevet :
**15.08.84 Bulletin 84/33**

(84) Etats contractants désignés :
**AT DE NL SE**

(56) Documents cités :
**FR-A- 2 049 376**
**FR-A- 2 284 480**
**FR-A- 2 305 317**
**FR-A- 2 351 626**

(73) Titulaire : **ESTEREL CARAVANES**
**159, rue du Général de Gaulle**
**F-76670 Le Houlme (FR)**

(72) Inventeur : **Dufrancatel, Michel**
**La Chapelle Notre Dame de Vie**
**F-06250 Mougins (FR)**

(74) Mandataire : **Derambure, Christian**
**Cabinet BUGNION ASSOCIES SARL 116, boulevard Haussmann**
**F-75008 Paris (FR)**

EP 0 036 817 B1

Jouve, 18, rue St-Denis, 75001 Paris, France

## Description

L'invention concerne un aménagement intérieur de véhicule tel que caravane pliante.

Une caravane pliante comporte une caisse inférieure, ayant un plancher et quatre panneaux inférieurs verticaux ; quatre panneaux supérieurs montés pivotant sur les panneaux inférieurs respectifs, placés soit verticalement, soit horizontalement lorsque la caravane est respectivement dépliée ou pliée ; un toit associé aux deux panneaux supérieurs avant et arrière, reposant soit sur ceux-ci, soit sur la caisse lorsque la caravane est respectivement dépliée ou pliée (brevet français n° 2 284 480).

Un aménagement intérieur connu d'une telle caravane comprend un premier meuble ayant un premier soubassement associé rigidement à un premier panneau latéral inférieur et un premier élément supérieur monté pivotant sur le soubassement autour d'un axe horizontal et parallèle audit premier panneau, mobile entre deux positions, horizontale escamotée et verticale d'utilisation où il est associé à un premier panneau latéral supérieur ; et un second meuble ayant un second soubassement associé rigidement à un second panneau latéral inférieur et un second élément supérieur mobile destiné à être placé contre le second panneau latéral supérieur. En variante, l'aménagement comprend un troisième meuble qui, en position d'utilisation, est associé au second panneau latéral supérieur à l'aplomb du second meuble. Le second élément supérieur et le troisième meuble sont montés amovibles pour être placés en position soit d'utilisation, soit escamotée dans la caisse lorsque la caravane est respectivement dépliée et pliée. Le pliage nécessite, pour l'aménagement et les panneaux supérieurs latéraux, les cinq phases successives suivantes : décrochage du troisième meuble du panneau supérieur, dépôt et blocage sur le plancher. Déplacement du second élément supérieur, dépôt et blocage sur le plancher. Basculement à 90° du premier élément supérieur jusqu'à sa position horizontale où il repose sur le second élément supérieur, par l'extrémité haute de sa face frontale. Basculement successivement du second et du premier panneau latéral supérieur reposant respectivement sur le premier élément supérieur et le second panneau. Au dépliage, on réalise les mêmes opérations dans l'ordre inverse.

En variante, l'aménagement comporte aussi un quatrième meuble associé, en position d'utilisation au premier panneau latéral supérieur, à côté du premier meuble notamment à l'aplomb d'un meuble bas fixe tel que coffre ou similaire. Le pliage nécessite alors aussi le décrochage et le blocage de ce quatrième meuble avant basculement des panneaux supérieurs latéraux.

Ce mode opératoire est long, fastidieux, nécessite un effort physique important, créée des risques de renversement du contenu du second élément supérieur et du troisième meuble, implique des moyens d'assujettissement des meubles en position escamotée.

On a déjà cherché à remédier partiellement à ces inconvénients en associant le second élément supérieur au second soubassement par des moyens de liaison cinématique et de préhension, ce qui ne réduit pas néanmoins, le nombre des phases opératoires.

Dans certains aménagements connus, le premier élément supérieur s'encastre dans le premier soubassement dont la partie haute doit être dépourvue de panneaux supérieur et frontal ne permettant pas le logement à demeure d'objets. Dans d'autres aménagements, la hauteur du premier soubassement est voisine de celle du second élément supérieur et le premier élément supérieur repose, en position escamotée, sur le premier soubassement et le second élément supérieur, donc écarté du plancher ce qui est gênant.

L'invention vise à remédier à ces inconvénients et propose un aménagement intérieur pour un véhicule pliant dans lequel l'axe de pivotement du premier élément supérieur est situé proche du premier panneau latéral inférieur, et la distance entre le plancher et l'axe correspond au moins sensiblement à la profondeur hors tout du premier élément supérieur de manière qu'en position escamotée cet élément a sa face frontale reposant sur le plancher. Le second élément supérieur est relié au second soubassement et au second panneau latéral supérieur par des premiers moyens de liaison cinématique, tels que le déplacement du second panneau supérieur provoque celui concomitant du second élément supérieur entre une position supérieure d'utilisation où il repose sur le second soubassement lorsque le second panneau supérieur est vertical, et une position inférieure escamotée, lorsque le second panneau supérieur est horizontal, où il repose au moins partiellement sur le fond du premier élément supérieur en position escamotée, le premier meuble et le second meuble étant placés au moins partiellement en regard l'un de l'autre. En outre, les moyens de liaison cinématique ont comme fonction de maintenir le second élément supérieur dans une position relative constante horizontale.

L'aménagement peut comporter un troisième meuble relié au second panneau latéral supérieur par des seconds moyens de liaison cinématique tels que le déplacement du second panneau supérieur provoque celui concomitant du troisième meuble entre une position d'utilisation où il est placé contre le second panneau supérieur vertical et une position inférieure escamotée où il repose sur le fond du premier élément supérieur escamoté.

L'aménagement peut aussi comporter un quatrième meuble associé au premier panneau supérieur par des troisièmes moyens de liaison cinématique sous la forme d'un cadre comportant deux bras associés à pivotement au premier panneau supérieur par des supports et au quatrième meuble.

L'invention offre de nombreux avantages ; le pliage et le dépliage sont aisés, l'opérateur n'ayant qu'à manipuler le premier élément supérieur et les deux panneaux supérieurs latéraux. L'opérateur n'a pas à soutenir le second élément supérieur et l'éventuel troisième meuble. Le second élément supérieur et le troisième meuble restent dans leur position relative initiale et n'ont pas à être vidés de leur contenu. Le second élément supérieur et le troisième meuble reposent en position escamotée sur le premier élément supérieur ce qui conduit à une meilleure stabilité. Les moyens d'assujettissement spécifiques des aménagements intérieurs au plancher sont superflus. Le premier soubassement peut comporter des panneaux supérieur et frontal et des objets peuvent y être logés à demeure. L'espace intérieur de la caravane pliée est mieux utilisé au rangement des différents meubles en position escamotée, notamment sur deux niveaux, ce qui libère une superficie notable du plancher, utilisable pour le rangement d'autres éléments du mobilier de la caravane.

Les autres caractéristiques de l'invention résulteront de la description qui suivra en référence aux dessins annexés dans lesquels :

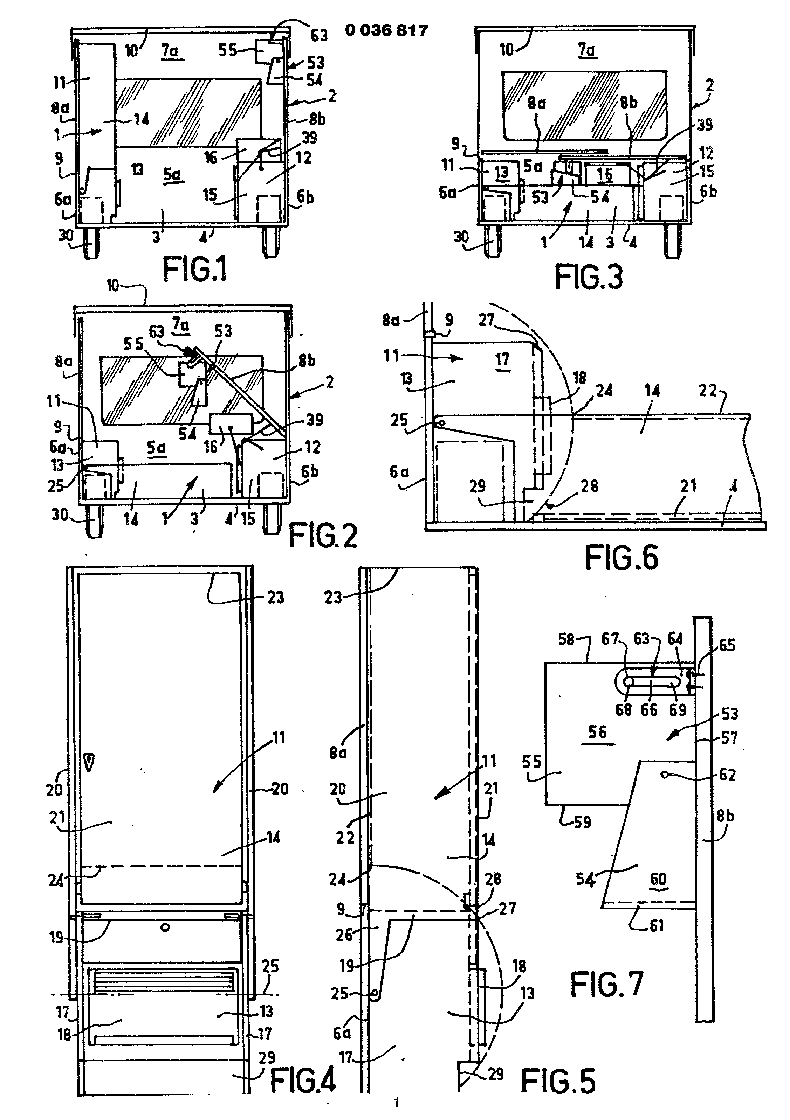

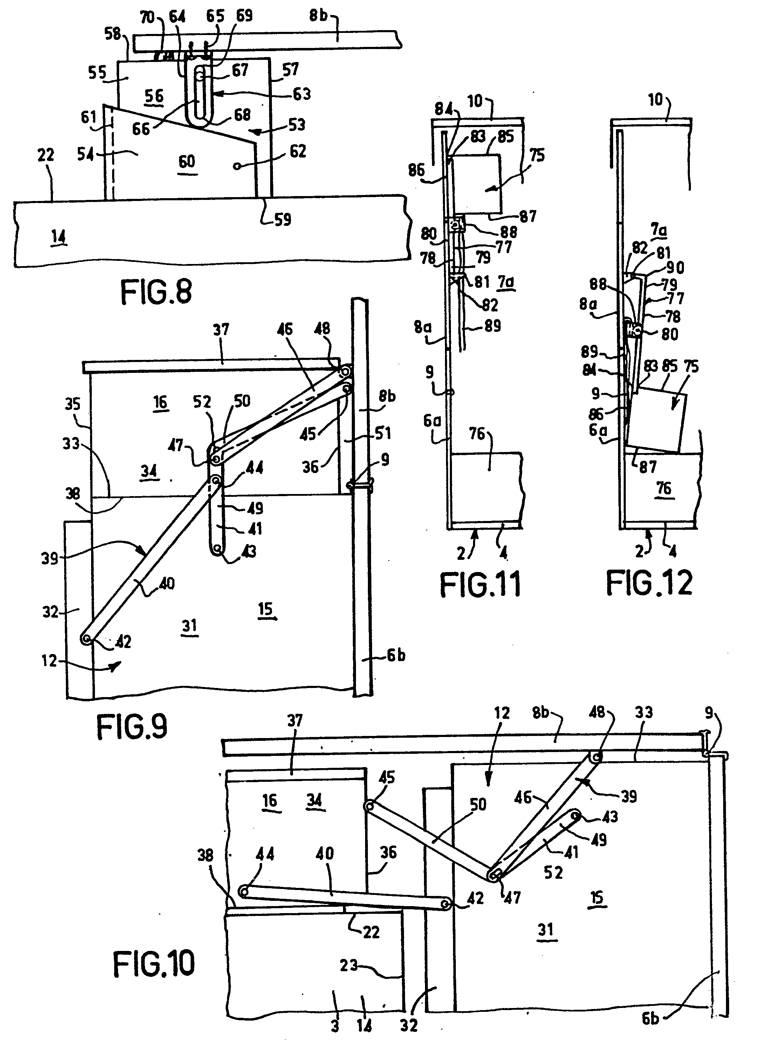

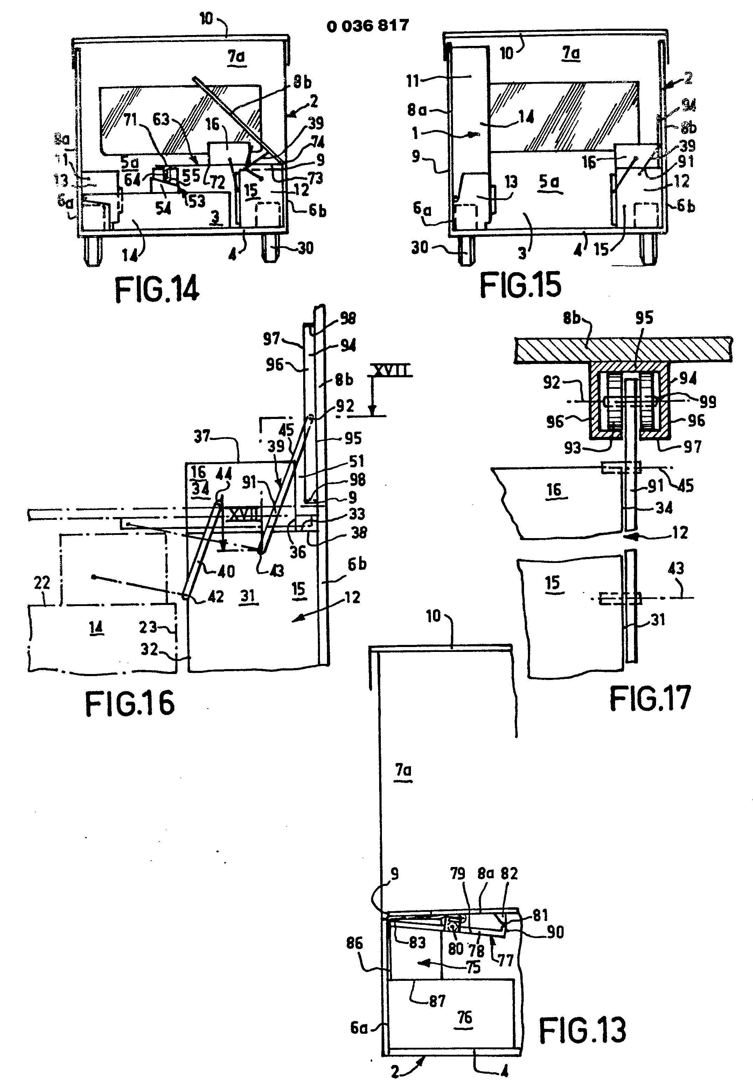

Les figures 1, 2 et 3 sont trois vues schématiques en coupe par un plan vertical et transversal d'une caravane pliante comportant l'aménagement intérieur suivant l'invention respectivement totalement dépliée ; partiellement dépliée, le second panneau latéral supérieur étant incliné, et partiellement dépliée, les premier et second panneaaux supérieurs latéraux étant en position horizontale. Les figures 4 et 5 sont deux vues schématiques respectivement en élévation et de côté du premier meuble de l'aménagement intérieur en position d'utilisation. La figure 6 est une vue schématique partielle de côté du premier meuble en position escamotée. Les figures 7 et 8 sont deux vues schématiques de côté du troisième meuble de l'aménagement intérieur en position respectivement d'utilisation et escamotée. Les figures 9 et 10 sont deux vues schématiques de côté du second meuble de l'aménagement intérieur en position respectivement d'utilisation et escamotée. Les figures 11, 12 et 13 sont trois vues schématiques de côtés du quatrième meuble de l'aménagement intérieur en position respectivement d'utilisation, partiellement escamoté, totalement escamoté. La figure 14 est une vue schématique en coupe par un plan vertical et transversal, semblable à la figure 2, montrant une variante de réalisation des seconds moyens cinématiques. La figure 15 est une vue schématique en coupe par un plan vertical et transversal d'une caravane pliante comportant une variante de l'aménagement intérieur en position totalement dépliée. La figure 16 est une vue schématique, de côté, du second meuble de l'aménagement intérieur de la figure 15, en position respectivement d'utilisation escamotée. La figure 17 est une vue schématique en coupe suivant la ligne XVII-XVII de la figure 16.

L'invention concerne un aménagement intérieur 1 pour une caravane pliante 2 qui comporte une caisse 3, inférieure, rigide, ayant un plancher 4 horizontal et quatre panneaux inférieurs fixes soit deux panneaux avant et arrière 5a et 5b et deux panneaux latéraux gauche et droite 6a et 6b ; quatre panneaux supérieurs soit deux panneaux avant et arrière 7a et 7b et deux panneaux latéraux gauche et droite 8a et 8b, montés à pivotement sur les panneaux inférieurs respectifs 5a, 5b, 6a, 6b autour d'axes d'articulation horizontaux 9 au moins sensiblement coplanaires dans un plan P ; et un toit 10 associé à pivotement et à coulissement aux panneaux 7a, 7b par leur bord horizontal opposé aux axes 9. La caravane 2 peut se trouver dans deux états extrêmes totalement dépliée (figure 1) ou totalement pliée. A l'état déplié, les panneaux 7a, 7b, 8a, 8b et ceux respectifs 5a, 5b, 6a, 6b sont coplanaires et le toit 10 en position haute repose sur les panneaux 7a, 7b, 8a, 8b. A l'état plié les panneaux 7a, 7b, 8a, 8b sont placés substantiellement horizontalement et le toit 10 repose sur la caisse 3. La caravane 2 peut comporter des vérins pneumatiques placés entre la caisse 3 et les panneaux 7a, 7b. La caravane comporte au moins une porte, notamment à l'endroit des panneaux 6a 8a, et au moins une fenêtre dans l'un au moins des panneaux 7a, 7b, 8a, 8b.

L'aménagement 1 s'applique naturellement à d'autres types de caravanes ou véhicules.

L'aménagement 1 comprend au moins un premier meuble 11 et un second meuble 12. Le meuble 11 comprend un premier soubassement 13 et un premier élément supérieur 14. Le meuble 12 comporte un second soubassement 15 et un second élément supérieur 16.

Le soubassement 13 a une forme générale parallélépipédique, limitée par deux parois latérales verticales 17, une paroi frontale verticale 18, une paroi supérieure horizontale 19, et un fond constitué par un premier panneau inférieur latéral notamment gauche 6a. Ce soubassement 13 est associé rigidement au plancher 4 et au panneau 6a, logé intégralement dans la caisse 3 en dessous du plan P, fermé à son extrémité haute tant horizontalement que verticalement, destiné à recevoir des objets, notamment à demeure.

L'élément 14 — tel qu'une penderie — a une forme générale parallélépipédique limitée par deux parois latérales verticales 20, deux parois parallèles frontale 21 et de fond 22, une paroi supérieure 23 à l'extrémité haute opposée au soubassement 13.

L'élément 14 est dépourvu de paroi inférieure. La paroi 22 comporte à son extrémité basse proche du soubassement 13 une découpe 24.

L'élément 14 est monté à pivotement sur le soubassement 13 autour d'un premier axe d'articulation 25, horizontal, longitudinal, parallèle aux panneaux 6a, 6b, proche du panneau 6a, entre deux positions extrêmes soit horizontale escamotée (figures 2, 3, 6) soit verticale d'utilisation (figures 1, 4, 5).

Chaque paroi 20 comporte à son extrémité basse et au moins vers le fond 22 un prolongement 26 coplanaire placé à l'extérieur et contre la paroi 17 pour le montage de l'axe 25. La distance entre le plancher 4 et l'axe 25 est au moins sensiblement égale à la profondeur hors tout de l'élément 14 (entre les parois 21 et 22), de manière qu'en position escamotée la paroi 21 repose sur le plancher 4. L'absence de paroi inférieure et la découpe 24 permettent le pivotement de l'élément 14. La profondeur de la découpe 24 est telle qu'elle puisse passer en regard de la première arête 27 définie par les parois 18 et 19, qui comporte un éventuel chanfrein, de même que la seconde arête 28 définie par le bord horizontal bas de la paroi 21. L'extrémité basse du soubassement 13 comporte un évidement frontal 29 pour le logement de l'arête 28.

Le meuble 11 comporte des moyens de verrouillage de l'élément 14 en position verticale placés soit entre cet élément et le panneau 8a, soit préférentiellement entre cet élément et le soubassement 13, par exemple des chevilles amovibles coopérant avec des lumières ou des verrous.

Le meuble 12 est placé au moins partiellement en regard du meuble 11. Les plans de symétrie verticaux et transversaux des meubles 11, 12 sont préférentiellement confondus ou voisins notamment au droit des roues 30.

Le soubassement 15 a une forme générale parallélépipédique limitée par deux parois latérales verticales 31, une paroi frontale verticale 32 et éventuellement une paroi horizontale supérieure 33 située notamment au voisinage du plan P. Ce soubassement 15 est logé intégralement dans la caisse 3 en dessous du plan P, associé rigidement au plancher 4 et au panneau 6b qui en constitue le fond.

La distance entre l'axe 25 et la paroi 32 est au moins égale à celle entre l'axe 25 et la paroi 23 pour que l'élément 14 en position escamotée n'interfère pas avec le soubassement 15 tout en étant situé au voisinage de celui-ci.

L'élément 16 a une forme générale parallélépipédique limitée par deux parois latérales verticales 34, une paroi frontale 35, une paroi de fond 36, deux parois horizontales supérieure 37 et inférieure 38. Cet élément 16 peut se trouver dans deux positions extrêmes soit supérieure d'utilisation soit inférieure escamotée. En position d'utilisation, il repose par sa paroi 38 sur la paroi 33 ou par ses parois 34 sur les deux parois 31. Escamoté, il est logé dans l'espace libre délimité par l'élément 14 escamoté, le soubassement 15 et le panneau 8b. Il est alors en appui au moins partiel sur la paroi 22, au voisinage du soubassement 15. A cet effet, l'écartement entre les parois 37 et 38 est au plus égal et préférentiellement voisin de la distance entre la paroi 22 de l'élément 14 escamoté et le plan P.

L'élément 16 est relié au soubassement 15 et au panneau 8b par des premiers moyens de liaison cinématique 39 dont une première fonction est de provoquer un déplacement de l'élément 16 concomitant à celui du panneau 8b de manière que lorsque ce dernier est dans les positions verticale et horizontale, l'élément 16 soit dans ses positions respectivement d'utilisation et escamotée, et une seconde fonction est de maintenir l'élément 16 dans une position relative constante horizontale.

Dans une forme d'exécution possible (figures 9, 10), les moyens 39 comprennent deux ensembles de biellettes placés de part et d'autre du meuble 12 et associés à ses parois 31 et 34. Chacun de ces ensembles comprend un couple de biellettes 40, 41 articulée chacune d'une part au soubassement 15 autour d'axes 42, 43 et d'autre part à l'élément 16 autour d'axes 44, 45. Les axes 42, 43, 44, 45 déterminent un parallélogramme déformable. Une troisième biellette 46 est articulée à la biellette 41 et au panneau 8b autour d'axes 47, 48. Les axes 42, 43, 44, 45, 47, 48 sont parallèles horizontaux, longitudinaux. La biellette 40 est rectiligne. La biellette 41 comporte deux tronçons 49, 50 respectivement adjacents aux axes 43, 45, inclinés l'un par rapport à l'autre, notamment d'une valeur comprise entre 90° et 180°, dont la concavité est tournée vers le panneau 8b.

Les axes 42, 43, 44, 45, 47 et 48 sont placés de manière que lors du pivotement du panneau 8b vers le bas, il n'interfère pas avec l'élément 16.

L'axe 42 est voisin de la paroi 32 et du plan de la paroi 22 de l'élément 14 escamoté (figure 10). L'axe 43 est situé sensiblement à égale distance de la paroi 32 et du panneau 6b du plan horizontal passant par l'axe 42 et de la paroi 33. L'axe 44 est voisin de la paroi 38 et sensiblement à égale distance des parois 35 et 36. L'axe 45 est situé au voisinage des parois 36, 37. Le tronçon 49 est plus court que le tronçon 50. L'axe 47 est voisin de la jonction des tronçons 49, 50. L'axe 48 est voisin d'un plan horizontal passant par la paroi 37, l'élément 16 étant en position d'utilisation.

Par exemple, les rapports d'écartement entre les différents axes sont, dans la forme d'exécution représentée les suivants ; l'écartement entre les axes 45 et 47, 47 et 48 est compris entre environ 1,4d et 1,5d, d étant l'écartement entre l'axe 43 et 47. L'écartement entre les axes 43 et 45 d'une part, 42 et 44 d'autre part, est de l'ordre de 2d.

La paroi 36 est préférentiellement écartée — lorsque l'élément 16 est en position d'utilisation — du panneau 8b pour ménager un espace 51 de logement de l'axe 48. L'axe 47 est monté à pivotement et coulissement dans une lumière 52 ménagée dans la biellette 41. Ce jeu permet d'éviter la recherche d'une grande précision dans les moyens cinématiques 39 et que l'élément 16 ne soit déplacé, lorsque la caravane est pliée et que le panneau 8b subit un léger déplacement.

L'aménagement 1 peut comporter un troisième meuble 53, mobile, destiné à être associé au panneau 8b au voisinage de son bord horizontal supérieur, à l'aplomb du meuble 12 lorsque la caravane 2 est dépliée.

Dans une forme d'exécution possible, le meuble 53 comprend deux troisièmes éléments inférieur 54 et supérieur 55. En variante, le meuble 53 ne comporte que l'élément 55.

L'élément 55 a une forme générale parallélépipédique limitée par deux parois latérales verticales 56, une paroi de fond verticale 57, une éventuelle paroi frontale et deux parois horizontales supérieure 58 et inférieure 59. L'élément 54 comprend essentiellement deux flancs latéraux verticaux 60, une paroi horizontale inférieure 61 et éventuellement un fond. L'élément 54 est monté à pivotement sur l'élément 55 autour d'un second axe d'articulation 62, horizontal, longitudinal, préférentiellement placé aux extrémités haute et basse respectivement des éléments 54 et 55, au voisinage de la paroi 57, au droit du centre de gravité de l'élément 54 dont la profondeur est plus faible que celle de l'élément 55. L'axe 62 est plus écarté de la paroi 61 que de la face frontale de l'élément 55 et situé sensiblement à égale distance des parois 57 et 59.

L'élément 55 peut occuper deux positions extrêmes, soit d'utilisation (figure 7), soit escamotée (figure 8). En position d'utilisation, l'élément 55 est suspendu en appui par sa paroi 57 contre le panneau 8b, par son propre poids.

L'élément 55 escamoté est en appui sur la paroi 22 de l'élément 14 escamoté. L'écartement entre les parois 58, 59 est au plus égal, préférentiellement voisin, de la distance entre la paroi 22 de l'élément 14 escamoté et le plan P.

L'élément 54 peut occuper deux positions extrêmes à 90° l'une de l'autre, soit d'utilisation, soit escamotée. En position d'utilisation il est suspendu à l'élément 55 par l'axe 62 et appliqué contre la paroi 8b. Escamoté (figure 8), il vient emboîter l'élément 55, sa paroi 61 se trouvant devant la face frontale de l'élément 55, les chants arrière des flancs 60 étant sensiblement coplanaires de la paroi 59, donc à l'extérieur des parois 56.

Le meuble 53 — notamment l'élément 55 — est relié au panneau 8b ou 6b par des seconds moyens de liaison cinématique 63. Dans une première variante (figures 1 à 3, 7 et 8), le meuble 53 est relié par les moyens 63 au panneau 8b de telle manière que le déplacement de ce panneau provoque celui concomitant du meuble 53 ou à tout le moins de l'élément 55. Lorsque le panneau 8b est dans ses positions respectives verticale et horizontale, les éléments 54, 55 sont dans leur position correspondante d'utilisation et escamotée. Le passage de l'élément 55, de sa position d'utilisation à sa position escamotée est réalisé manuellement.

Les moyens 63 comprennent par exemple deux ensembles placés de part et d'autre du meuble 53, associés aux parois 56, comportant chacun une patte 64 associée rigidement et perpendiculairement au panneau 8b par des organes de fixation 65, située au voisinage de la paroi 56 et percée d'une lumière oblongue 66 de direction générale perpendiculaire au panneau 8b avec laquelle coopère un téton 67 rigidement associé perpendiculairement à la paroi 56, au voisinage de la paroi 58, approximativement à égale distance de la paroi 57 et de la face frontale de l'élément 55. Les dispositions du téton 67 et de l'axe 62 sont telles que dans leur position d'utilisation, les éléments 54 et 55 soient normalement sollicitées par leur propre poids contre le panneau 8b.

Lors du basculement du panneau 8b vers le bas, le meuble 53 garde sa position initiale relative. Il pivote autour des tétons 67 autour des pattes 64 dans les parties extrêmes frontales 68 des lumières 66. Lorsque le panneau 8b est au voisinage immédiat de sa position horizontale, l'élément 54 est basculé à pivotement, manuellement, jusqu'à sa position escamotée, ce qui est possible, le panneau 8a étant vertical. Le basculement du panneau 8b est poursuivi jusqu'à l'horizontal, le téton 67 coulissant dans la lumière 66 jusqu'à la partie extrême de fond 69. Le panneau 8b repose sur la paroi 58 notamment par l'intermédiaire d'un organe d'amortissement 70.

Dans une autre variante (figure 14) les moyens 63 sont associés au panneau 6b à l'endroit ou au voisinage de son bord horizontal supérieur ou au panneau 8b à l'endroit ou au voisinage de son bord horizontal inférieur, ou à la charnière entre les panneaux 6b et 8b. Les moyens 63 comportent alors un cadre rigide, de forme générale au moins pseudo-plane, de contour en forme générale de U ou pseudo U comportant une âme 71 horizontale et deux bras 72 parallèles articulés à leur extrémité libre 73 opposée à l'âme 71 aux panneaux 6b 8b ou leur charnière, comme indiqué plus haut, autour d'un axe 74 horizontal, parallèle à ou confondu avec l'axe d'articulation 9 du panneau 8b. A l'âme 71 sont fixés rigidement sensiblement perpendiculairement au plan du cadre 71, 72 des moyens de liaison au meuble 53, notamment tel que les pattes 64. Il est alors prévu des moyens d'assujettissement du meuble 53 et/ou du cadre 71, 72 au panneau 8b, lorsque le meuble 53 est en position d'utilisation, tel que verrou, cliquet, etc. Au pliage, on déverrouille les moyens d'assujettissement, puis on fait basculer le cadre 71, 72 de sa position verticale coplanaire au panneau 8b et à sa position horizontale, le panneau 8b restant vertical pour être ensuite basculé jusqu'à sa position horizontale.

Dans une variante possible du meuble 53 (non représenté) une ou les deux parois latérales 56 comportent des joues coplanaires dirigées vers le bas sous la paroi 59, constituant des pieds reposant sur le plancher 4 lorsque le meuble 53 est en position escamotée, tout en favorisant son appui sur le panneau 8b en position d'utilisation. Cette variante est plus particulièrement destinée au cas d'un meuble 53 de largeur plus importante que celle du premier meuble 11, ou ne venant pas au droit de celui-ci.

L'aménagement peut comporter éventuellement, un ou plusieurs quatrièmes meubles (figures 11 à 13) 75 associés au panneau 8a, se trouvant, en position d'utilisation en partie haute de ce panneau (figure 11) et reposant, en position escamotée soit sur un élément 76 de la caisse tel qu'une banquette, coffre ou similaire, soit sur un élément de l'aménagement tel que le premier élément supérieur 14, soit directement sur le plancher 4 par l'intermédiaire de pieds comme dans la variante décrite pour le meuble 53.

Le meuble 75 est associé à des troisièmes moyens de liaison cinématiques 77 reliés au panneau 6a ou au panneau 8a ou à la charnière entre les deux panneaux 6a, 8a.

Dans une première et une seconde variante non représentées, les moyens 77 sont semblables à la première et à la seconde forme de réalisation des moyens 63. Pour éviter que les meubles 53, 75 n'interfèrent l'un avec l'autre et que le meuble 75 n'interfère avec le panneau 8b horizontal, le meuble 75 est suffisamment éloigné de la partie haute du panneau 8a dans la première variante et les meubles 53, 75 sont décalés l'un par rapport à l'autre longitudinalement dans la seconde variante.

Dans une troisième variante (figures 11 à 13), les moyens 77 permettent de placer le meuble 75 escamoté dans une zone inutilisée, notamment au voisinage immédiat du panneau 6a.

Les moyens 77 comprennent, par exemple, un cadre 78 rigide, de forme générale au moins pseudo-plane, ayant une forme générale de pseudo H, comportant deux bras 79 et une traverse 80 horizontale reliant les bras 79 par leur partie médiane, venant encadrer le meuble 75. Les bras 79 sont associés, à leur première extrémité (inférieure lorsque le meuble 75 est en position d'utilisation), à pivotement autour d'un axe 81 horizontal, sur un support 82 fixé rigidement au panneau 8a — tel que des pattes. A leur seconde extrémité supérieure lorsque le meuble 75 est en position d'utilisation), les bras 79 sont associés à pivotement sur le meuble 75, autour d'un axe 83 notamment placé au voisinage immédiat de l'arête horizontale supérieure et arrière 84 du meuble 75 entre ses parois supérieure 85 et de fond 86. Les axes 81 et 83 sont préférentiellement placés au voisinage immédiat du panneau 8a.

En position d'utilisation, le meuble 75 est maintenu suspendu par l'axe 83, son fond 86 étant en appui contre le panneau 8a, le cadre 78 étant dirigé vers le haut au-dessus du support 82. Des moyens d'assujettissement (verrous, cliquets, etc.) permettent de garder cette position.

Le meuble 75 escamoté repose comme indiqué plus haut (dans le cas de la figure 13) sur l'élément 76, les moyens d'assujettissement ayant été préalablement déverrouillés, le panneau 8a étant vertical, le cadre 78 dirige vers le bas au-dessous du support 82.

La distance entre l'axe 81 et le plan d'appui du meuble 75 est égale ou voisine de la distance entre l'axe 81 et la paroi 87 du meuble 75 placée horizontalement, le meuble 75 dégagé du cadre 78 placé substantiellement verticalement.

La distance entre les axes 81 et 83 est égale ou voisine de celle entre les axes 81 et 9 (en ce qui concerne le panneau 8a) et la paroi 85 du meuble 75 escamoté est coplanaire ou au voisinage du plan P.

Cette forme de réalisation permet le montage sur le cadre 78 d'une boîte à rideau 88 pour un rideau 89 ou une tablette par exemple dans la partie médiane des bras 79, en dessous de la paroi 87 lorsque le meuble 75 est en position d'utilisation. Préférentiellement, les bras 79 forment, à leur première extrémité un coude 90 à angle droit permettant au cadre 78 d'être placé contre le panneau 8a en position d'utilisation du meuble 75 et d'en être écarté dans la position intermédiaire (figure 12) et dans la position pliée (figure 13), ce qui permet le logement de la boîte à rideau 88 dont le rideau 89 vient se loger entre les panneaux 6a, 8a et le meuble 75. Cette variante des moyens 77 est applicable aux moyens 63.

Dans une variante (figures 15 à 17), les moyens 39 comprennent deux ensembles de biellettes placés de part et d'autre du meuble 12 et associées à ses parois 31 et 34, comprenant chacun un couple de biellettes 40, 91, articulées chacune au soubassement 15 autour d'axes 42, 43 à l'élément 16 autour d'axes 44, 45. Les axes 42, 43, 44, 45 déterminent un parallélogramme déformable.

La biellette 91 est rectiligne, se prolonge au-delà de l'axe 45 comporte à son extrémité libre un axe d'articulation 92 avec le panneau 8b. Les axes 42, 43, 44, 45 et 92 sont parallèles, horizontaux, longitudinaux.

Les axes 42 et 43, 44, 45 ont au moins sensiblement la même position décrite antérieurement. L'axe 92 est situé au voisinage de l'axe 45. L'axe 92 est monté à coulissement transversal sur le panneau 8b, dans une direction orthogonale aux axes 42, 43, 44, 45, 92. Par exemple (figure 17) la biellette 91 est garnie à son extrémité libre de galets 93, montés à rotation libre autour de l'axe 92, montés dans un chemin de roulement et guidage 94, rectiligne, ayant par exemple en section droite transversale une forme générale de U comprenant une âme 95 associée rigidement à la face interne du panneau 8b, deux ailes 96 et deux retours d'ailes 97 dirigés l'un vers l'autre, empêchant tout désengagement intempestif des galets 93 et constituant une surface de roulement et de guidage de ceux-ci, de même que l'âme 95. Le chemin de roulement et guidage 94 est associé rigidement au panneau 8b (vissage, collage, soudage). La longueur du chemin de roulement et guidage 94 est au moins égale à la course de coulissement nécessaire à l'axe 92 pour permettre le passage de l'élément 16 entre ses positions d'utilisation et escamotée.

Les chemins de guidage 94 peuvent comporter à ses extrémités libres supérieure et inférieure des butées 98, éventuellement amovibles.

L'espace 51 est utilisable pour le logement du chemin de guidage 94.

En variante, la biellette 91 est articulée seulement au soubassement 15 et au panneau 8b autour des axes 43, 92. Une courte biellette est articulée à l'élément 16 autour de l'axe 45 et à la biellette 91.

L'aménagement peut comporter éventuellement d'autres meubles.

Les moyens de liaison cinématique 39, 63, 77 peuvent faire l'objet d'autres variantes de même que les meubles 11, 12, 53, 75 dont les parois frontales peuvent constituer en tout ou partie des éléments de porte ou tiroirs.

La caravane 2 qui comporte l'aménagement 1 peut être pourvue de moyens élastiques unidirectionnels tels que vérins à gaz placés entre la caisse 3 et les panneaux 8a, 8b et/ou les éléments 14, 16 du meuble 53, 75 ou associés aux moyens cinématiques 39, 63, 77.

Préférentiellement, les vérins sont articulés à la caisse 3 et aux panneaux 8a, 8b. Ils sollicitent en permanence les panneaux 8a, 8b dans le sens du dépliage de la caravane. Ces vérins sont préférentiellement placés non pas partiellement à l'extérieur ou à l'intérieur de la caravane, notamment du côté extérieur ou du côté intérieur des panneaux qui constituent la caravane, mais sont placés au moins partiellement dans les logements ou gorges et des chanfreins creusés dans l'épaisseur même desdits panneaux, masqués vers l'extérieur et l'intérieur, notamment un logement ou gorge ménagé dans un panneau 5a, 5b à partir de son chant horizontal supérieur. Dans ce cas les chants horizontaux supérieurs des panneaux 5a, 5b, 6a, 6b peuvent être coplanaires.

Pour plier la caravane 2 comportant l'aménagement 1, on fait d'abord passer l'élément 14 de sa position d'utilisation à sa position escamotée. Ensuite, on fait passer successivement les panneaux 8b puis 8a de leur position verticale à leur position horizontale. Eventuellement, en fin de course du panneau 8b, on fait passer l'élément 54 de sa position d'utilisation à sa position escamotée.

Dans le cas de la deuxième forme de réalisation des moyens cinématiques 63, après avoir déplacé l'élément 14 et avant de déplacer le panneau 8b, on vient placer le troisième meuble 53 en position escamotée.

Dans le cas d'un aménagement comportant un quatrième meuble 75, le pliage comporte la mise en position escamotée de celui-ci avant le basculement du panneau 8a.

Dans la variante des moyens 39, lors du basculement du panneau 8b, l'axe 92 coulisse le long du chemin de guidage 94 notamment jusqu'à sa position extrême de coulissement, la plus écartée de l'axe 9, lorsque l'élément 16 vient reposer sur la paroi 22 de l'élément 14.

**Revendications**

1. Aménagement intérieur de véhicule pliant comportant une caisse inférieure (3) ayant un plancher (4) et quatre panneaux inférieurs (5a, 5b, 6a, 6b) ; quatre panneaux supérieurs (7a, 7b, 8a, 8b) montés à pivotement sur les panneaux inférieurs, l'aménagement comprenant un premier meuble (11) ayant un premier soubassement (13) associé rigidement à un premier panneau latéral inférieur (6a) et un premier élément supérieur (14) ayant une paroi frontale (21) et une paroi de fond (22) et monté à pivotement sur le premier soubassement (13) autour d'un premier axe (25) horizontal et parallèle au premier panneau latéral inférieur (6a), mobile entre deux positions horizontale escamotée et verticale d'utilisation où il est associé à un premier panneau latéral supérieur (8a) ; un second meuble (12) ayant un second soubassement (15) associé rigidement à un second panneau latéral inférieur (6b) et un second élément supérieur (16) mobile, destiné à être placé contre un second panneau latéral supérieur (8b) opposé au premier panneau latéral supérieur (8a), caractérisé par le fait que le premier axe (25) est situé proche du premier panneau latéral inférieur (6a) et que la distance entre le plancher (4) et le premier axe (25) correspond au moins sensiblement à la profondeur hors tout du premier élément supérieur (14) de manière qu'en position escamotée du premier élément supérieur (14), sa paroi frontale (21) repose sur le plancher (4), et par le fait que le second élément supérieur (16) est relié au second soubassement (15) et au second panneau supérieur (8b) par des premiers moyens de liaison cinématique (39) tels que le déplacement du second panneau supérieur (8b) provoque celui concomitant du second élément supérieur (16) entre une position supérieure d'utilisation où il repose sur le second soubassement (15) lorsque le second panneau supérieur (8b) est vertical, et une position inférieure escamotée, lorsque le second panneau supérieur (8b) est horizontal, où il repose au moins partiellement sur la paroi de fond (22) du premier élément supérieur (14) en position escamotée, le premier meuble (11) et le second meuble (12) étant placés au moins partiellement en regard l'un de l'autre, les moyens de liaison cinématique (39) ayant en outre comme fonction de maintenir le second élément supérieur (16) dans une position relative constante horizontale.

2. Aménagement suivant la revendication 1, caractérisé par le fait que les moyens de liaison cinématique (39) comportent une première biellette (40) et une seconde biellette (41) articulées chacune au second soubassement (15) et au second élément supérieur (16), les axes d'articulation (42, 43, 44, 45) définissant un parallélogramme déformable, et une troisième biellette (46) articulée à la seconde biellette (41) et au second panneau supérieur (8b).

3. Aménagement suivant la revendication 2 où le second élément supérieur (16) comporte des parois frontales (35) et de fond (36) et des parois horizontales supérieure (37) et inférieure (38), le second soubassement (15) ayant une paroi frontale (32) et une paroi supérieure (33), caractérisé par le fait que la seconde biellette (41) comporte deux tronçons (49, 50) inclinés, l'axe d'articulation (47) de la troisième biellette (46) étant situé à leur jonction et coopérant avec une lumière (52), l'axe (42) reliant la première biellette (40) au second soubassement (15) étant situé au voisinage de la paroi frontale (32) du second soubassement (15) et du plan de la paroi de fond (22) du premier élément supérieur (14) en position escamotée, l'axe (43) reliant la seconde biellette (41) au second soubassement (15) étant situé approximativement à égale distance d'une part de la paroi frontale (32) du second soubassement (15) et du second panneau inférieur (6b) et d'autre part de la paroi supérieure (33) du second soubassement (15) et du plan horizontal de la paroi de fond (22) du premier élément supérieur (14) ; l'axe (44) reliant la première biellette (40) au second élément supérieur (16) étant situé au voisinage de la paroi inférieure (38) du second élément supérieur (16) et sensiblement à égale distance des parois frontale (35) et de fond (36) du second élément supérieur (16) ; l'axe (45) reliant la seconde biellette (41) au second élément supérieur (16) étant situé au voisinage des parois de fond (36) et supérieure (37) du second élément supérieur (16) ; l'axe (48) reliant la troisième biellette (46) au second panneau supérieur (8b) étant situé au voisinage du plan horizontal passant par la paroi supérieure (37) du second élément supérieur (16) lorsque le second élément supérieur (16) est en position d'utilisation.

4. Aménagement suivant la revendication 1, caractérisé par le fait que les premiers moyens de liaison cinématique (39) comportent une première biellette (40) et une seconde biellette (91) articulées chacune au second soubassement (15) et au second élément supérieur (16), les axes d'articulation (42, 43, 44, 45) des biellettes définissant un parallélogramme déformable, la seconde biellette (91) étant associée cinématiquement au second panneau supérieur (8b) autour d'un axe (92) monté à coulissement transversal sur le second panneau supérieur (8b), dans une direction orthogonale aux axes d'articulation (42, 43, 44, 45), au moyen de galets (93), montés dans un chemin de roulement et guidage (94) associé rigidement au second panneau supérieur (8b).

5. Aménagement suivant la revendication 4, caractérisé par le fait que l'axe (92) monté à coulissement est placé au voisinage de l'axe (45) reliant la seconde biellette (91) au second élément supérieur (16), le chemin de roulement et guidage (94) est rectiligne et comporte des butées d'extrémités (98), la seconde biellette (91) est rectiligne.

6. Aménagement suivant l'une quelconque des revendications 4 et 5, caractérisé par le fait que la seconde biellette (91) est articulée au second élément supérieur (16) par l'intermédiaire d'une courte biellette qui est associée à pivotement au second élément supérieur (16) et à la seconde biellette (91).

7. Aménagement suivant l'une quelconque des revendications 1 à 6, qui comporte en outre un troisième meuble mobile (53) destiné à être associé au second panneau latéral supérieur (8b), caractérisé par le fait que ce troisième meuble (53) est associé au second panneau supérieur (8b) par des seconds moyens de liaison cinématique (63) tels que le déplacement du second panneau supérieur (8b) provoque celui concomitant du troisième meuble (53) entre une position d'utilisation où il est placé contre le second panneau supérieur (8b) vertical et une position inférieure escamotée où il se repose sur la paroi de fond (22) du premier élément supérieur (14) escamoté.

8. Aménagement suivant la revendication 7, caractérisé par le fait que le troisième meuble (53) comprend un troisième élément supérieur (55) et un troisième élément inférieur (54) monté à pivotement sur le troisième élément supérieur (55) autour d'un second axe (62) le troisième élément supérieur (55) pouvant venir s'emboîter dans le troisième élément inférieur (54).

9. Aménagement suivant l'une quelconque des revendications 7 et 8, caractérisé par le fait que les seconds moyens de liaison cinématique (63) comprennent une patte (64) associée rigidement au second panneau supérieur (8b), comportant une lumière (66) avec laquelle coopère un téton (67) associé rigidement au troisième meuble (63).

10. Aménagement suivant l'une quelconque des revendications 7 et 8, caractérisé par le fait que les seconds moyens de liaison cinématique (63) comportent un cadre comportant une âme (71) et deux bras (72) associés à pivotement autour d'un axe (74) au second panneau inférieur (6b) ou au second panneau supérieur (8b) ou à la charnière entre les seconds panneaux inférieur (6b) et supérieur (8b), le troisième meuble (53) étant associé à pivotement à l'âme (71).

11. Aménagement suivant l'une quelconque des revendications 1 à 10, qui comporte en outre un quatrième meuble (75) destiné à être associé au premier panneau supérieur (8a), caractérisé par le fait que ce quatrième meuble (75) est associé au premier panneau supérieur (8a) par des troisièmes moyens de liaison cinématique (77) sous la forme d'un cadre (78) comportant deux bras (79) associés à pivotement au premier panneau supérieur (8a) par des supports (82) et au quatrième meuble (75).

12. Aménagement suivant l'une quelconque des revendications 1 à 11, caractérisé par le fait qu'il comporte des moyens élastiques unidirectionnels tels que des vérins à gaz entre la caisse (3) et les premier et second éléments supérieurs (14, 16) ou les troisième et quatrième meubles (53, 75) ou associés aux moyens cinématiques (39, 63, 77).

## Claims

1. An interior arrangement of a folding vehicle comprising a lower casing (3) having a floor (4) and four lower panels (5a, 5b, 6a, 6b) ; four upper panels (7a, 7b, 8a, 8b) mounted pivotally on the lower panels, the arrangement comprising a first fitting (11) having a first substructure (13) associated rigidly with a first lower lateral panel (6a) and a first upper element (14) having a front wall (21) and a rear wall (22) and mounted pivotally on the first substructure (13) about a first horizontal shaft (25) which is parallel to the first lower lateral panel (6a), movable between a retracted horizontal position and a vertical position of use or is associated with a first upper lateral panel (8a) ; a second fitting (12) having a second substructure (15) associated rigidly with a second lower lateral panel (6b) and a second movable upper element (18) which is to be placed against a second upper lateral panel (8b) opposite the first upper lateral panel (8a), characterized in that the first shaft (25) is situated near the first lower lateral panel (6a) and in that the distance between the floor (4) and the first shaft (25) corresponds at least substantially to the overall depth of the first upper element (14) so that, in the retracted position of the first upper element (14), its front wall (21) rests on the floor (4), and in that the second upper element (16) is connected to the second substructure (15) and to the second upper panel (8b) by first kinematic connecting means (39) such that the displacement of the second upper panel (8b) causes the concomitant displacement of the second upper element (16) between an upper position of use where it rests on the second substructure (15), when the second upper panel (8b) is vertical, and a retracted lower position, when the second upper panel (8b) is horizontal where is rests at least partially on the rear wall (22) of the first upper element (14) in the retracted position, the first fitting (11) and the second fitting (12) being disposed at least partially opposite each other, the kinematic connecting means (39) further having the function of maintaining the second upper element (16) in a constant horizontal relative position.

2. An arrangement according to claim 1, characterized in that the kinematic connecting means (39) comprise a first link (40) and a second link (41) both articulated at the second substructure (15) and at the second upper element (16), the articulation shafts (42, 43, 44, 45) defining a deformable parallelogram, and a third link (46) articulated at the second link (41) and at the second upper pannel (8b).

3. An arrangement according to claim 2 where the second upper element (16) comprises front (35) and rear (36) walls and upper (37) and lower (38) horizontal walls, the second substructure (15) having a front wall (32) and an upper wall (33), characterized in that the second link (41) comprises two inclined sections (49, 50), the articulation shaft (47) of the third link (46) being situated at their junction and cooperating with a slot (52), the shaft (42) connecting the first link (40) to the second substructure (15) being situated in the vicinity of the front wall (32) of the second substructure (15), and of the plane of the rear wall (22) of the first upper element (14) in a retracted position, the shaft (43) connecting the second link (41) to the second substructure (15) being situated approximately at an equal distance on the one hand from the front wall (32) of the second substructure (15) and of the second lower panel (6b) and on the other hand from the upper wall (33) of the second substructure (15) and from the horizontal plane of the rear wall (22) of the first upper element (14) ; the shaft (44) connecting the first link (40) to the second upper element (16) being situated in the vicinity of the lower wall (38) of the second upper element (16) and substantially at an equal distance from the front (35) and the rear (36) walls of the second upper element (16) ; the shaft (45) connecting the second link (41) to the second upper element (16) being situated in the vicinity of the rear (36) and upper (37) walls of the second upper element (16) ; the shaft (48) connecting the third link (46) to the second upper panel (8b) being situated in the vicinity of the horizontal plane passing through the upper wall (37) od the second upper element (16) when the second upper element (16) is in the position of use.

4. An arrangement according to claim 1, characterized in that the first kinematic connecting means (39) comprise a first link (40) and a second link (91) both articulated at the second substructure (15) and at the second upper element (16), the articulation shafts (42, 43, 44, 45) of the links defining a deformable parallelogram, the second link (91) being associated kinematically with the second upper panel (8b) about a shaft (92), mounted so as to slide transversely on the second upper panel (8b) in a direction at right-angles to the articulation shafts (42, 43, 44, 45) by means of rollers (93), mounted in a rolling and guiding path (94) associated rigidly with the second upper panel (8b).

5. An arrangement according to claim 4, characterized in that the shaft (92), mounted so as to slide, is disposed in the vicinity of the shaft (45) connecting the second link (91) to the second upper element (16), in that the rolling and guiding path (94) is rectilinear and comprises end stops (98), and in that the second link (91) is rectilinear.

6. An arrangement according to any one of claims 4 and 5, characterized in that the second link (91) is articulated at the second upper element (16) by means of a short link which is associated pivotally with the second upper element (16) and with the second link (91).

7. An arrangement according to any one of claims 1 to 6, which further comprises a third movable fitting (53), which is to be associated with the second upper lateral panel (8b), characterized in that this third fitting (53) is associated with the second upper panel (8b) by second kinematic connecting means (63) such that the displacement of the second upper panel (8b) causes the concomitant displacement of the third fitting (53) between a position of use where it is disposed against the second upper vertical panel (8b) and a lower retracted position where ir rests on the rear wall (22) of the first retracted upper element (14).

8. An arrangement according to claim 7, characterized in that the third fitting (53) comprises a third upper element (55) and a third lower element (54), mounted pivotally on the third upper element (55) about a second shaft (62), it being possible for the third upper element (55) to be fitted into the third lower element (54).

9. An arrangement according to any one of claims 7 and 8, characterized in that the second kinematic connecting means (63) comprise a tab (64) associated rigidly with the second upper panel (8b), comprising a slot (66) with which a projection, associated rigidly with the third fitting (63), cooperates.

10. An arrangement according to any one of claims 7 and 8, characterized in that the second kinematic connecting means (63) comprise a frame comprising a core (71) and two arms (72) associated pivotally about a shaft (74) with the second lower panel (6b) or with the second upper panel (8b) or with the hinge between the second lower (6b) and upper (8b) panels, the third fitting (53) being associated pivotally with the core (71).

11. An arrangement according to any one of claims 1 to 10, which further comprises a fourth piece of furniture (75) which is to be associated with the first upper panel (8a), characterized in that this fourth fitting (75) is associated with the first upper panel (8a) by third kinematic connecting means (77) in the form of a frame (78) comprising two arms (79) associated pivotally with the first upper panel (8a) by supports (82) and with the fourth fitting (75).

12. An arrangement according to any one of claims 1 to 11, characterized in that it comprises unidirectional resilient means such as gas jacks between the casing (3) and the first and second upper elements (14, 16) or the third and fourth pieces of furniture (53, 75) or associated with kinematic means (39, 63, 77).

**Ansprüche**

1. Innere Einrichtung für ein faltbares Fahrzeug, das mit einem unteren Kasten (3), der einen Boden (4) und vier unteren Wandplatten (5a, 5b, 6a, 6b) aufweist, und mit vier oberen Wandplatten (7a, 7b, 8a, 8b), die an den unteren Wandplatten Schwenkbar befestigt sind, versehen ist, mit einem ersten Möbel (11), das einen ersten Sockel (13), der mit einer ersten unteren Seitenwandplatte (6a) fest verbunden ist, und ein erstes oberes Element (14) aufweist, das eine Vorderwand (21) und eine Rückwand (22) besitzt und auf dem ersten Sockel (13) um eine erste horizontale und zur ersten unteren Seitenwandplatte (6a) parallele Achse (25) schwenkbar befestigt und zwischen einer horizontalen eingeklappten Lage und einer vertikalen Gebrauchslage, in welcher es mit einer ersten oberen Seitenwandplatte (8a) verbunden ist beweglich ist, und mit einem zweiten Möbel (12), das einen zweiten Sockel (15) besitzt, der mit einer zweiten unteren Seitenwandplatte (6b) fest und mit einem zweiten oberen Element (16) beweglich verbunden ist, das zu einer zweiten oberen Seitenwandplatte (8b), die der ersten oberen Seitenwandplatte (8a) gegenüber liegt, hin bringbar ist, dadurch gekennzeichnet, daß die erste Achse (25) nahe der ersten unteren Seitenwandplatte (6a) angeordnet ist und daß der Abstand zwischen dem Boden (4) und der ersten Achse (25) mindestens etwa der Gesamttiefe des ersten oberen Elementes (14) derart entspricht, daß in der eingeklappten Lage des ersten oberen Elementes (14) dessen Vorderwand (21) auf dem Boden (4) ruht, und daß das zweite obere Element (16) mit dem zweiten Sockel (15) und mit der zweiten oberen Wandplatte (8b) durch ein erstes kinematisches Verbindungsmittel (39) derart verbunden ist, daß das Bewegen der zweiten oberen Wandplatte (8b) bewirkt, daß in Begleitung damit das zweite obere Element (16) sich zwischen einer oberen Gebrauchslage, in der es auf dem zweiten Sockel (15) ruht, wenn die zweite obere Wandplatte (8b) vertikal ist, und einer unteren eingeklappten Lage, wenn die zweite obere Wandplatte (8b) horizontal ist, in der es zumindest teilweise auf der Rückwand (22) der ersten oberen Elementes (14) in eingeklappter Lage ruht, bewegt, wobei das erste Möbel (11) und das zweite Möbel (12) zumindest teilweise einander gegenüber liegen und wobei das kinematische Verbindungsmittel (39) darüber hinaus das zweite obere Element (16) in dessen stabiler horizontaler Lage zu halten hat.

2. Einrichtung nach Anspruch 1, dadurch gekennzeichnet, daß das kinematische Verbindungsmittel (39) einen ersten Hebelarm (40) und einen zweiten Hebelarm (41), die jeweils am zweiten Sockel (15) und am zweiten oberen Element (16) angelenkt sind, wobei die Schwenkachsen (42, 43, 44, 45) ein veränderliches Parallelogramm bilden, und einen dritten Hebelarm (46) aufweist, der am zweiten Hebelarm (41) und an der zweiten oberen Wandplatte (8b) angelenkt ist.

3. Einrichtung, bei der das zweite obere Element (16) eine Vorderwand (35) und eine Rückwand (36) und eine obere und untere horizontale Wand (37, 38) aufweist und der zweite Sockel (15) und eine Vorderwand (32) und eine obere Wand (33) besitzt, nach Anspruch 2, dadurch gekennzeichnet, daß der zweite Hebelarm (41) zwei geneigte Abschnitte (49, 50) aufweist, daß die Schwenkachse (47) des dritten Hebelarmes (46) an deren Verbindung angeordnet ist und mit einem Schlitz (52) zusammenwirkt, daß die Achse (42), die den ersten Hebelarm (40) mit dem zweiten Sockel (15) verbindet, nahe der Vorderwand (32) des zweiten Sockels (15) und der Ebene der Rückwand (22) des ersten oberen Elementes (14) in eingeklappter Lage angeordnet ist, daß die Achse (43), die den zweiten Hebelarm (41) mit dem zweiten Sockel (15) verbindet, etwa in gleichem Abstand einerseits von der Vorderwand (32) des zweiten Sockels (15) und der zweiten unteren Platte (6b) und andererseits von der oberen Wand (33) des zweiten Sockels (15) und der horizontalen Ebene der Rückwand (22) des ersten oberen Elementes (14) angeordnet ist, daß die Achse (44), die den ersten Hebelarm (40) mit dem zweiten oberen Element (16) verbindet, nahe der unteren Wand (38) des zweiten oberen Elementes (16) und etwa in gleichem Abstand von der Vorderwand (35) und der Rückwand (36) des zweiten oberen Elementes (16) angeordnet ist, daß die Achse (45), die den zweiten Hebelarm (41) mit dem zweiten oberen Element (16) verbindet, nahe der Rückwand (36) und der oberen Wand (37) des zweiten oberen Elementes (16) angeordnet ist, daß die Achse (48), die den dritten Hebelarm (46) mit der zweiten oberen Wandplatte (8b) verbindet, nahe der horizontalen Ebene angeordnet ist, die durch die obere Wand (37) des zweiten oberen Elementes (16) hindurchgeht, wenn das zweite obere Element (16) in seiner Gebrauchslage ist.

4. Einrichtung nach Anspruch 1, dadurch gekennzeichnet, daß das erste kinematische Verbindungsmittel (39) einen ersten Hebelarm (40) und einen zweiten Hebelarm (91) aufweist, die jeweils mit dem zweiten Sockel (15) und dem zweiten oberen Element (16) gelenkig verbunden sind, daß die Schwenkachsen (42, 43, 44, 45) der Hebelarme ein veränderliches Parallelogram bilden, daß der zweite Hebelarm (91) mit der zweiten oberen Wandplatte (8b) über eine Achse (92) kinematisch verbunden ist, die an der zweiten oberen Wandplatte (8b) quer verschieblich befestigt ist, und zwar in einer Richtung senkrecht zu den Schwenkachsen (42, 43, 44, 45) und mittels Rollen (93), die in einer Roll- und Führungsbahn (94) gehalten sind, die mit der zweiten oberen Wandplatte (8b) fest verbunden ist.

5. Einrichtung nach Anspruch 4, dadurch gekennzeichnet, daß die verschieblich befestigte Achse (92) nahe der Achse (45), die den zweiten Hebelarm (91) mit dem zweiten oberen Element (16) verbindet, angeordnet ist, daß die Roll- und Führungsbahn (94) geradlining ist und Endanschläge (98) aufweist, und daß der zweite Hebelarm (91) geradlinig ist.

6. Einrichtung nach Anspruch 4 oder 5, dadurch gekennzeichnet, daß der zweite Hebelarm (91) und das zweite obere Element (16) durch Zwischenschalten eines kurzen Hebelarmes, der am oberen Element (16) und am zweiten Hebelarm (91) schwenkbar angelenkt ist, gelenkig verbunden sind.

7. Einrichtung, die ferner ein drittes bewegliches Möbel (53) aufweist, das mit der zweiten oberen Seitenwandplatte (8b) verbindbar ist, nach einem der Ansprüche 1 bis 6, dadurch gekennzeichnet, daß das dritte Möbel (53) mit der Zweiten oberen Wandplatte (8b) durch ein zweites kinematisches Verbindungsmittel derart verbunden ist, daß das Bewegen der zweiten oberen Wandplatte (8b) bewirkt, daß in Begleitung damit das dritte Möbel (53) zwischen einer Gebrauchslage, in der es an der zweiten oberen Wandplatte (8b) vertikal anliegt, und einer unteren eingeklappten Lage, in der es auf der Rückwand (22) des ersten eingeklappten Elementes (14) ruht, bewegbar ist.

8. Einrichtung nach Anspruch 7, dadurch gekennzeichnet, daß das dritte Möbel (53) ein drittes oberes Element (55) und ein drittes unteres Element (54), das am dritten oberen Element (55) um eine zweite Achse (62) schwenkbar befestigt ist, aufweist, wobei das dritte obere Element (55) in das dritte untere Element (54) einsteckbar ist.

9. Einrichtung nach Anspruch 7 oder 8, dadurch gekennzeichnet, daß das zweite kinematische Verbindungsmittel (63) eine Lasche (64) aufweist, die mit der zweiten oberen Wandplatte (8b) starr verbunden ist und einen Schlitz (66) aufweist, mit dem ein Zapfen (67) zusammenwirkt, der mit dem dritten Möbel (63) starr verbunden ist.

10. Einrichtung nach Anspruch 7 oder 8, dadurch gekennzeichnet, daß das zweite kinematische Verbindungsmittel (63) einen Rahmen aufweist, der einen Steg (71) und zwei Arme (72) aufweist, die um eine Achse (74) mit der zweiten unteren Wandplatte (6b) oder mit der zweiten oberen Wandplatte (8b) oder mit dem Scharnier zwischen der zweiten unteren und der zweiten oberen Wandplatte (6b, 8b) schwenkbar befestigt sind, und daß das dritte Möbel (53) mit dem Steg (71) schwenkbar verbunden ist.

11. Einrichtung, die ferner ein viertes Möbel (75) aufweist, das mit der ersten oberen Wandplatte (8a) verbindbar ist, nach einem der Ansprüche 1 bis 10, dadurch gekennzeichnet, daß das vierte Möbel (75) mit der ersten oberen Wandplatte (8a) über ein drittes kinematisches Verbindungsmittel (77) in Form eines Rahmens (78) verbunden ist, der zwei Arme (79) aufweist, die mit der ersten oberen Wandplatte (8a) mittels Träger (82) und mit dem vierten Möbel (75) schwenkbar verbunden sind.

12. Einrichtung nach einem der Ansprüche 1 bis 11, dadurch gekennzeichnet, daß es einseitig gerichtete Federmittel, wie bspw. Gashebemittel, zwischen dem Kasten (3) und den ersten und zweiten oberen Elementen (14, 16) oder den dritten und vierten Möbeln (53, 75) oder den zugehörigen kinematischen Mitteln (39, 63, 77) aufweist.

0 036 817

FIG.1

FIG.2

FIG.3

FIG.4

FIG.5

FIG.6

FIG.7

0 036 817

FIG.8

FIG.9

FIG.10

FIG.11

FIG.12

2

0 036 817

FIG.14

FIG.15

FIG.16

FIG.17

FIG.13

3